# EUROPEAN PATENT SPECIFICATION

(11) **EP 3 732 601 B1**
(45) Date of publication and mention of the grant of the patent: **25.11.2026**
(21) Application number: 19741323.0
(22) Date of filing: 14.01.2019
(51) Int. Cl.: G06F 21/32, G06N 20/00, H04K 1/00, H04L 9/32, H04L 9/40

(54) **ECHOPRINT USER AUTHENTICATION**
ECHOPRINT-BENUTZERAUTHENTIFIZIERUNG
AUTHENTIFICATION D'UTILISATEUR ECHOPRINT

(30) Priority: 17.01.2018 US 201815873384
(43) Date of publication of application: 04.11.2020
(73) Proprietor: HUAWEI TECHNOLOGIES CO., LTD., Shenzhen, Guangdong 518129 (CN)
(72) Inventor: LI, Changzhu, Shenzhen, Guangdong 518129 (CN); WU, Shuang, Shenzhen, Guangdong 518129 (CN)
(74) Representative: Thun, Clemens
(86) International application number: PCT/CN2019/071521
(87) International publication number: WO 2019/141139

(56) References cited:
- EP-A1- 3 156 978
- WO-A1-2017/113370
- CN-A- 105 635 087
- US-A1- 2015 033 305
- US-A1- 2016 316 366
- US-A1- 2017 316 194
- US-B1- 7 158 776
- LINGHAN ZHANG ET AL: "Hearing Your Voice is Not Enough : An Articulatory Gesture Based Liveness Detection for Voice Authentication", PROCEEDINGS OF THE 2017 ACM SIGSAC CONFERENCE ON COMPUTER AND COMMUNICATIONS SECURITY , CCS '17, 1 January 2017 (2017-01-01), New York, New York, USA, pages 57 - 71, XP055522279, ISBN: 978-1-4503-4946-8, DOI: 10.1145/3133956.3133962
- ZHANG, LINGHAN ET AL.: "Hearing Your Voice is Not Enough: An Articulatory Gesture Based Liveness Detection for Voice Authentication", CCS '17, 3 November 2017 (2017-11-03), XP055522279

## Description

### BACKGROUND

Various authentication mechanisms are currently utilized to prevent unauthorized access to processing devices such as personal computers and mobile devices. Password-based logins have given way to biometric forms of authentication such as fingerprint readers and facial recognition. Current biometric forms of authentication generally require some special form of biometric sensors be coupled to the processing device.

The EP 3 156 978 A1 provides a method for a secure speaker verification, whereby the method comprises the steps of generating a random textual prompt for a user to speak; awaiting for a user to speak the generated textual prompt and recording the corresponding speech. In parallel to the said speech recording the method further comprises recording ultrasound signals reflected from the users face and subjecting the recorded speech to automatic speech recognition in order to obtain a textual representation of the speech. Hereby the users liveness is determined based on a correspondence of said recorded audio signal with said recorded ultrasound signal as well as based on the automatically recognized speech. Furthermore, the method comprises executing a text accuracy validation on said recorded speech subjected to the automatic speech recognition in comparison to the generated, textual prompt; and executing an authentication of the user based on results of said detecting user's liveness, and said text accuracy validation in order to verify whether the user was speaking the generated prompt, at the time of recording.

In "Hearing Your Voice is Not Enough: An Articulatory Gesture Based Liveness Detection for Voice Authentication", by Linghan Zhang et al. (Proceedings of the 2017 ACM SIGSAC Conference on Computer and Communications Security, January 2017, pages 57-71, DOI: 10.1145/3133956.3133962) a similar method and system is disclosed, showing a liveness detection system for replay attack detection on smartphones. Hereby the system uses the smartphone as a Doppler radar, which transmits a high frequency acoustic sound from the built-in speaker and listens to

### AMENDED DESCRIPTION

the reflections at the microphone when a user speaks a passphrase. The signal reflections due to user's articulatory gesture result in Doppler shifts, which are then analyzed for live user detection

### BRIEF SUMMARY

The present invention is defined by the independent claims. Further advantageous developments are shown by the dependent claims.

One general aspect of the present disclosure includes a processing device having audio-based authentication, including: a display; a microphone; a speaker; an audio signal generator coupled to the speaker adapted to output a user-specific inaudible sound to the speaker; a signal processor coupled to the microphone adapted to isolate reflections of the user-specific inaudible sound signal and create an echoprint based on the reflections; and a processor configured to compare the test echoprint with a user-specific echoprint model associated with the user; perform an alternative authentication operation to authenticate the user based on the comparison; and update a device state according to the comparison or the alternative authentication operation performed, with the device state comprising whether the display is on or off and whether the device is locked or unlocked

Optionally, in any of the preceding aspects the device includes a machine learning processor is adapted to create the user-specific echoprint during an alternative authentication set-up procedure. Optionally, in any of the preceding aspects the echoprint identifies features associated with the user, such features including at least biometric features or behavioral features. Optionally, in any of the preceding aspects the biometric features include at least physical attributes or cardiac attributes. Optionally, in any of the preceding aspects the machine learning processor is adapted to build the user-specific echoprint model during a period less than or equal to beginning when a user enables authentication through when a user selects to enable audio-based authentication. Optionally, in any of the preceding aspects the signal processor is adapted to build the user-specific echoprint during a period between entry of a password entry user interface through a user-interface prompt suggesting the user enable audio-based authentication. Optionally, in any of the preceding aspects, the device further includes a non-volatile storage device adapted to store one or more echoprints generated by the signal processor as a training data set and the user-specific echoprint model. Optionally, in any of the preceding aspects the machine learning processor is adapted to receive user feedback on authentication recognition and update the user-specific echoprint model based on the feedback. Optionally, in any of the preceding aspects the audio signal generator and signal processor are adapted to operate while the display is on and the device is locked, and are adapted to remain in standby when the display is off and the device is locked.

Another general aspect includes a processor-implemented method of authenticating user access to a processing device having a display, including: generating a user-specific echoprint model using a machine learning process by outputting an inaudible sound signal at a user-specific frequency from a speaker associated with the processing device, and receiving reflections of the inaudible sound signal at a microphone associated with the processing device while the user interacts with an alternative authentication user interface; authenticate the user access when the display is on by generating a test echoprint by outputting an inaudible test sound signal at a user-specific frequency from the speaker, and receiving reflections of the inaudible test sound signal at the microphone; comparing the test echoprint with the user-specific echoprint model to determine whether to allow the user to access the processing device; performing an alternative authentication method based on the comparison; and allowing or denying access to the processing device based on the testing by updating a device state according to the comparing or the alternative authentication operation performed, the device state comprising whether the display is on or off and whether the device is locked or unlocked.

Optionally, in any of the preceding aspects the generating a test echoprint, the receiving reflections of the inaudible test sound signal, and the testing occur while the display is on and the device is locked, and do not occur when the display is off or the device is locked. Optionally, in any of the preceding aspects the outputting and receiving for generating the user-specific echoprint model are repeated a plurality of times to create a training dataset for a machine learning process. Optionally, in any of the preceding aspects the testing outputs a different user-specific inaudible test sound signal upon an authentication failure, and the testing isolates reflections of the different user-specific inaudible test sound signal and creates a new test echoprint based on the reflections of the different user-specific inaudible test sound signal. Optionally, in any of the preceding aspects the generating comprises identifying features associated with the user, such features including at least biometric features or behavioral features. Implementations of the described techniques may include hardware, a method or process, or computer software on a computer-accessible medium.

Another aspect includes a non-transitory computer-readable medium storing computer instructions, that when executed by one or more processors, cause the one or more processors to perform the steps of: generate an echo-print model for a user by: generating an echoprint model for a user by: outputting an inaudible sound signal at a user-specific frequency from a speaker associated with the processor; receiving reflections of the inaudible sound signal; generating an echo-print based on the reflections and associating the echo-print with a user; repeating the outputting, receiving and generating to create training data. The non - transitory computer - readable medium also includes authenticating a user to provide access to a processing device having a display, by, when the display device is on and the device is locked: outputting a test inaudible sound signal at the user-specific frequency from a speaker associated with the processing device; receiving reflections of the test inaudible sound signal; generating at least one test echo-print based on the reflections of the test inaudible sound signal; comparing the echoprint by a user-specific echoprint model to determine whether to allow the user to access the processing device; performing an alternative authentication method based on the comparing; and allow or denying access to the processing device based on the testing and the alternative authentication method by updating a device state according to the comparing or the alternative authentication operation performed, the device state comprising whether the display is on or off and whether the device is locked or unlocked.

Optionally, in any of the preceding aspects, the non-transitory computer-readable medium storing computer instructions includes instructions where outputting a user-specific inaudible sound includes outputting a different test user-specific inaudible sound and the signal processor adapted to isolate reflections of the different test user-specific inaudible sound and create an echoprint based on the reflections. Optionally, in any of the preceding aspects, the non-transitory computer-readable medium storing computer instructions includes instructions where each outputting sends the user-specific inaudible signal. Optionally, in any of the preceding aspects the non-transitory computer-readable medium storing computer instructions includes instructions which cause the one or more processors to update the user-specific echoprint model using a machine learning process based on user feedback of whether the testing was accurate. Optionally, in any of the preceding aspects, the non-transitory computer-readable medium storing computer instructions includes instructions where the echoprint identifies features associated with the user, such features including at least biometric features or behavioral features. Optionally, in any of the preceding aspects, the non-transitory computer-readable medium storing computer instructions includes instructions wherein the biometric features include at least physical attributes, or cardiac attributes.

### BRIEF DESCRIPTION OF THE DRAWINGS

Aspects of the present disclosure are illustrated by way of example and are not limited by the accompanying figures for which like references indicate like elements.
FIG. 1 illustrates a first embodiment of a processing device illustrating an overview of the present technology using audio signals and echoprints to authenticate user access to a processing device.
FIG. 2A is a flowchart illustrating a selection process for determining a type of authentication to use with a processing device.
FIGS. 2B - 2D are depictions of user interfaces illustrating a set-up process for a processing device.
FIG. 3 is a flowchart illustrating a process of acquiring an audio reflection based echo signature.
FIG 4. is a flowchart illustrating building a user model using machine learning.
FIG. 5 is a flowchart illustrating testing and updating of a user echoprint model.
FIG. 6A illustrates an authentication process in accordance with the technology.
FIG. 6B illustrates one embodiment of a testing processor suitable for implementing at least a portion of the process of FIG. 6A.
FIG. 6C illustrates one alternative for the processing of reflected signals in step 625 of FIG. 6A.
FIG. 7 illustrates a status of an audio authentication method and an alternative authentication method based on the display state and the locked vs. unlocked state of the processing device.
FIG. 8 illustrates a mobile processing device in accordance with the present technology.

### DETAILED DESCRIPTION

Technology is presented which enables an audio-based, continuous authentication of a user to provide access to a processing device. The audio-based authentication uses sound waves generated and received by standard components usually found in processing devices, enabling incorporation of the technology into existing devices as well as new devices. Speakers associated with or incorporated into a processing device emit a user-specific inaudible sound. The user-specific sounds are reflected by the user and used to construct an "echo" print (an audio signature incorporating various biometric and behavioral features associated with the user) which is tested by a well-trained echoprint model. If the test result is positive, access to the processing device may be allowed.

In one aspect, training of the echo print model may occur while the user interacts with a user interface to enable an alternative form of authentication, such as password-based authentication. In this aspect, the device may emit user-specific inaudible sound while the user is creating a password and train the echoprint model, then prompt the user to enable an audio authentication system, also referred to herein as "EchoID."

Access to any processing device, or resource on a processing device, may be restricted until an authorized user authenticates. The audio authentication system may be combined with any suitable alternative authentication system. In some embodiments, the alternative authentication system may include a system for detecting biometric features or attributes of a user. For example, the processing device may include a biometric fingerprint system operative to detect and authenticate a user based on features of or under a user's skin.

The processing device 100 may provide any suitable combination of authentication systems, including for example biometric authentication systems and/or pattern-based authentication systems (such as passcode authentication).

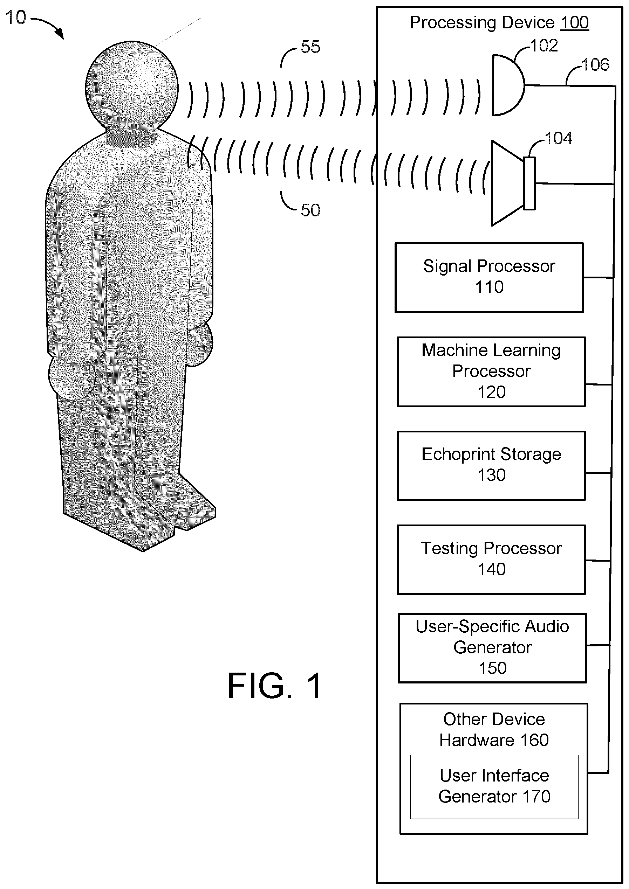

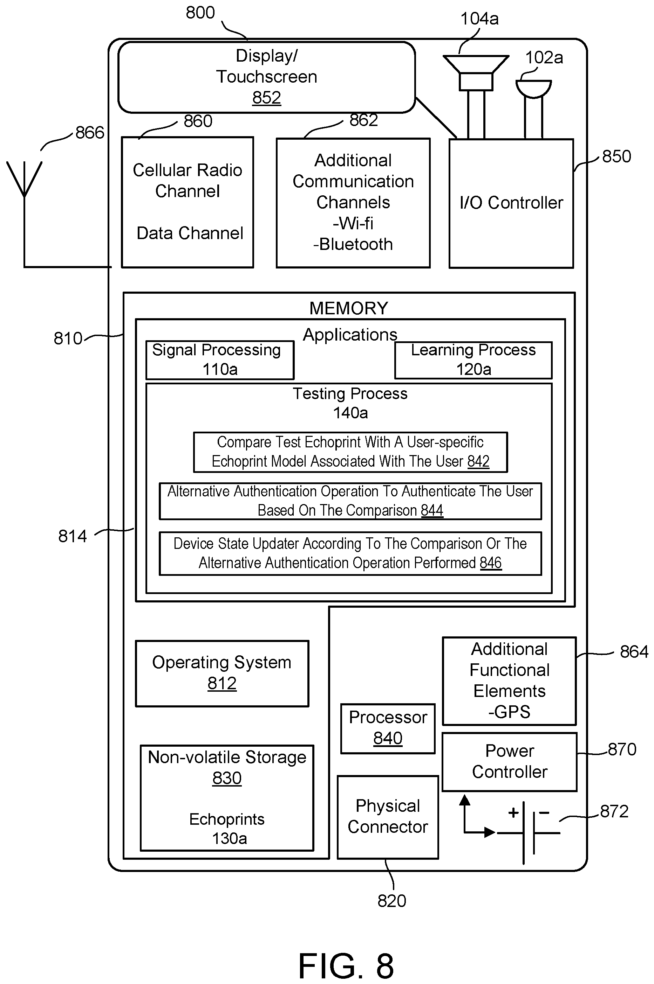

FIG. 1 illustrates a processing device 100 suitable for implementing audio-based authentication interacting with a user 10. Processing device 100 may include a microphone 102, a speaker 104 and other components connected by a bus 106. As illustrated in FIG. 1, the components of the processing device 100 include signal processor 110, a machine learning processor 120, an echo signature storage device 130, a testing processor 140, and a user-specific audio generator 150. Other device hardware 160 may be provided in the processing device, including a user-interface generator 170 creating and outputting various user interfaces to a display, as described herein. Specific examples of processing device 100 are illustrated in FIG. 8. In processing device 100, an audio-based authentication of a user 10 may be performed by first causing the user-specific audio generator 150 to generate a user-specific inaudible audio signal 50, which is output from the speaker 104. The user-specific inaudible sound may be in the audible frequency range, but at a volume which is too low for the human ear, or in the infrasound or ultrasound frequency range. Reflections 55 of the user-specific inaudible audio 50 are received by and detected by the microphone 102 and provided to signal processor 110. Signal processor 110 processes the reflected audio 55 (or "echos") and creates an echoprint. The echoprint may comprise an audio signature in which a combination of various biometric and behavioral features derived from the reflections 55 are identified. When is tested by a user-specific echoprint model which identifies those features of the signature which can be matched to an individual user, reflections 55 can be used to identify and authenticate user 10.

The user-specific audio signal may be designed to comprise a signal which is emitted from the speaker which has a high statistical probability of being unique to that user's processing device relative to another processing device which may be nearby. This may be achieved by creating the user-specific audio signal with randomized elements in the signal, including elements of time, frequency and/or amplitude, or any other variation of an audio signal which may be emitted by the speaker 104.

An echoprint storage device 130 is a nonvolatile storage device which can be accessed by the processors in order to perform the functions described herein. The testing processor 140 tests the newly received reflections during an authentication process to an echoprint user model to perform an authentication. The echoprint user model is created by the machine learning processor 120, as described herein. The machine learning processor 120 can access feedback from authentication events to improve the echoprint user model.

Each of the processors illustrated in FIG. 1 may be implemented as separate processors dedicated to providing the functions described herein implemented by a dedicated hardware processor, a programmable processor including a combination of hardware and instructions operable to cause the processor to perform the described functions, or as a general purpose single processor executing instructions operable to instruct a single processor to perform the described functions. Thus, as illustrated in Fig 8, each of the "processors" illustrated in FIG. 1 may be implemented as a process created by executing the instructions operable to instruct one or more processors to perform the functions associated with the processor of FIG. 1.

In order to implement security on a processing device, generally a user is provided with an opportunity to select the type of authentication the user wishes to use with the processing device. Various forms of alternative authentication may be utilized with audio-based authentication described herein. The technology provides an easily usable form of authentication using hardware already incorporated into most mobile devices, such as a speaker and microphone. The technology is also unobtrusive to the user, using an inaudible sound signal to perform authentication.

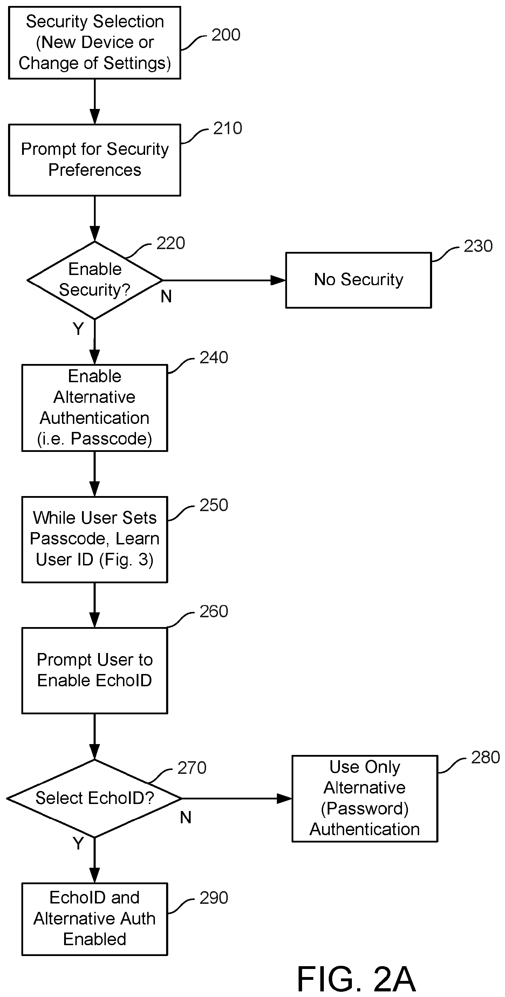

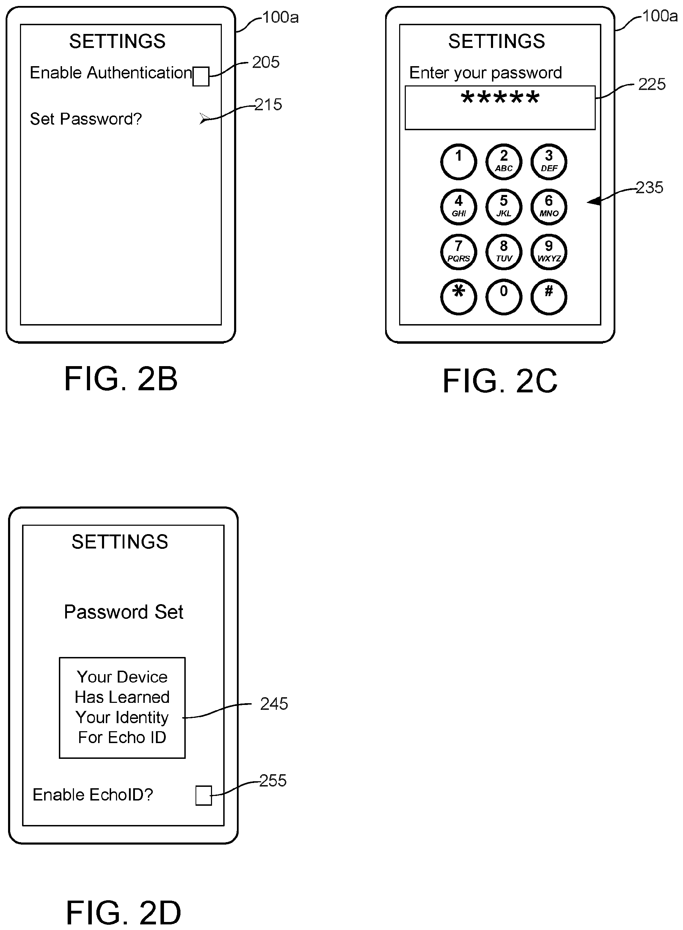

FIG. 2A illustrates a method allowing a user to select the type of security authentication they wish to utilize in a processing device. Initially, at 200, a security selection operation is performed. FIGS. 2B - 2D illustrate exemplary user-interfaces on a processing device (displayed, for example, on a display 852 of a mobile device 800 of FIG. 8). The interfaces may be created by the user interface generator 170. The security selection operation can be performed by a user accessing a processing device user interface settings screen to change a securities selection, or may be automatically generated when a user accesses a processing device for the first time. For example, the process of FIG. 2A may be performed during an initial device set-up process, or at some point after a user has been operating a device and decides that they wish to switch authentication modes.

At 210, a user may be prompted for a selection of security preferences. The prompt may take any form of display in a user interface provided on a display device associated with the processing device. Device 100a may be a processing device such as device 800 illustrated in FIG. 8. In one embodiment, a SETTINGS prompt may comprise a check box which the user selects to "enable authentication", and an option may be provided to allow the user to set a numeric or alphanumeric password. On a touch screen interface such as that illustrated in FIG. 8, a user may touch a check box 205. As illustrated in FIG. 8, a display may be integrated in a housing with processing device, or provided separate from a housing of the processing device. Once prompted at 210, the user may select to enable security at 220 by, for example, touching check box 205. If the user does not select to enable security at 220, then no security may be utilized with the processing device at 230. If the user selects to enable security at 220, and the user may select to enable a passcode at 240. In the user interface of FIG. 2B, this may be performed by selecting arrow 215 which provides a user interface such as that shown in FIG. 2C.

In one embodiment, at 250, while the user enters a passcode in the UI of FIG. 2C, an echoprint model for the user is trained. Training can occur during a period beginning with the selection of the enable authentication check mark 205, or beginning when the user selects the arrow 215. The period may continue while the user keys in the password using a keyboard 235 through to the point that a prompt (illustrated in FIG. 2D) is shown to the user (or any sub-period of the foregoing period).

Once the user completes entering the passcode at 250, a prompt is issued at 260. The prompt is illustrated at FIG 2D. As shown therein, the user interface may indicate a "password set" and contain a prompt 245 encouraging the user to enable EchoID and a check interface 255 allowing the user to enable selection of EchoID in addition to the passcode authentication.

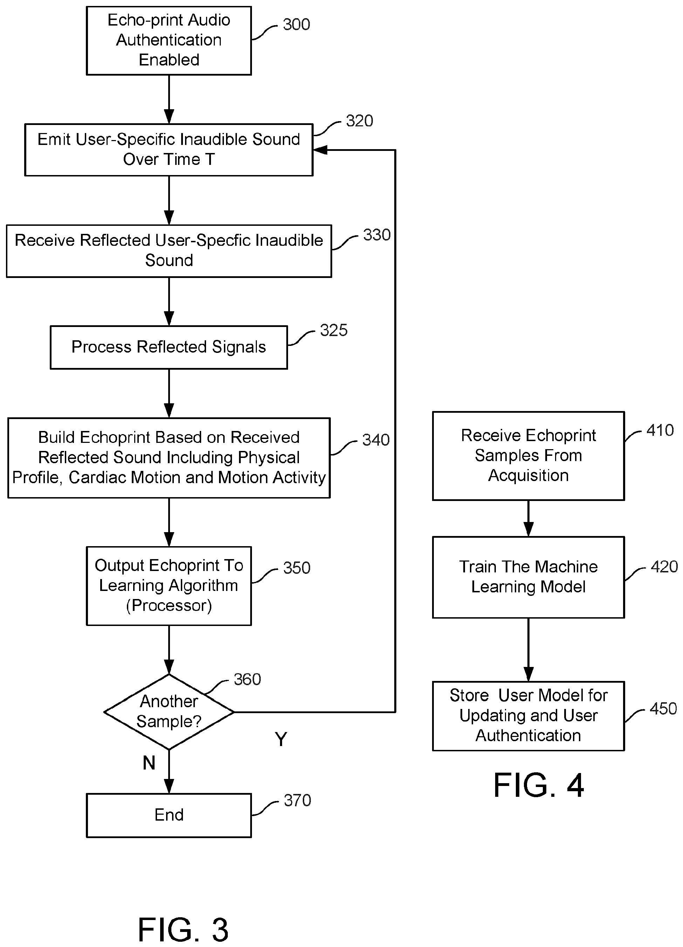

Audio-based authentication or EchoID as discussed herein is based on sampling inaudible sound reflections of an emitted unique and user-specific signal. FIG.3 illustrates one method for outputting and receiving reflections to create an echoprint for use in the audio-based authentication herein.

Initially, echoprint audio authentication is enabled at 300. As discussed above, the user may have various options to enable various types of authentication within the processing device.

At 320, a user-specific inaudible sound is emitted over a particular period of time T. The emitted sound at 320 is unique to each device. The uniqueness of the sound signal allows the technology to isolate reflected sounds in creating the echoprint. The period of time T may be alternatively referred to as the sample period and may range from nano-seconds to multiple seconds. At 330, the processing device receives reflected user-specific inaudible sounds for a time T. The receipt time may be time shifted with respect to the initial emission time of the sound signal at 320. The reflections or echoes will, after processing at 325, show characteristics of a user which illustrate unique physical characteristics, including cardiac motion, and biometric (human shape) data, and human motion activity. At 340 the method builds an echoprint based on the received reflected sound and identifies data samples which are unique to a user. At 350, the echoprint is output to a machine learning algorithm or stored in a training data set which may implemented by the learning processor or stored in a training data set for later use by the learning processor.

At 360, a determination is made as to whether additional samples should be acquired. If an additional sample is to be acquired, then the method returns to step 320 and steps 330, 340, 350 and 360 are repeated. Generally, multiple samples are acquired to statistically create the echoprint model. To perform an authentication, one or many samples over multiple sampling periods may be acquired before testing the samples to the echoprint model for a user.

If no additional samples are to be acquired, the method ends at 370. After a sufficient number of samples has been acquired, a user-specific echoprint model may be created.

FIG. 4 illustrates a method of building a user-specific model for the echoprint characteristics of an individual user. At 410, echoprint samples output by step 350 are received by a learning process or processor. The echoprint samples are associated desired output results for both echoprints identifying a user and echoprints which do not identify a user into one or more test data sets. At 420, a user echoprint model is calculated which characterizes those features uniquely associated with a user. The model may be created by machine learning using any of a number of known machine learning techniques.

Any of multiple machine learning techniques can be utilized in the present technology. Each authorized user for whom the training data is available will have a model developed specifically for the user.

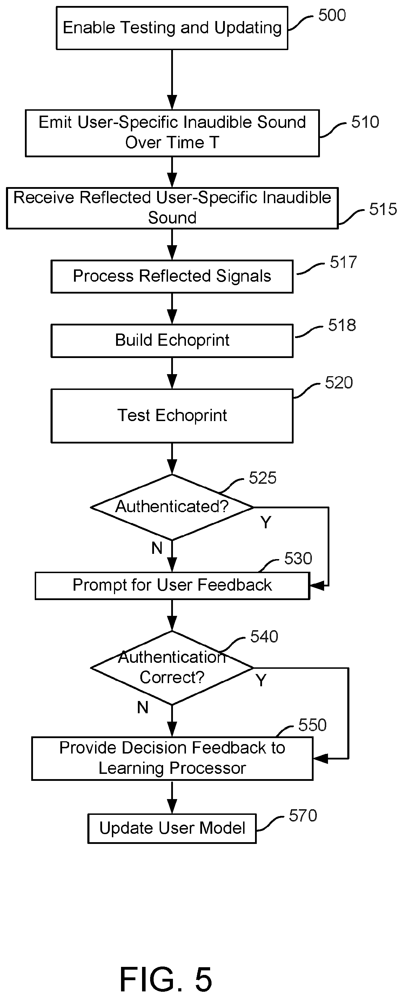

At 450, the model is stored and may thereafter be subjected to use in testing new samples to authenticate a user and may be updated by the learning processor using a method in accordance with FIG. 5

Creation of an echoprint and an echoprint model may take many forms. In one embodiment, an echoprint is a set of data comprising an N-dimension vector. Each dimension may represent a feature or an element of a feature. Building an echoprint may comprise mapping the sound signal to this set of data.

Once a user-specific model has been created, the model may be updated based on user feedback relative to the accuracy of the authentication the audio-based authentication makes.

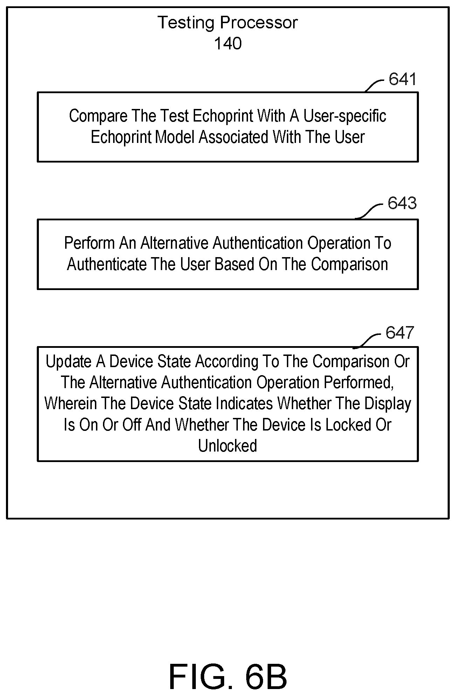

FIG. 5 illustrates a method for testing and updating a user-specific echoprint model. At 500, the testing and updating process is enabled in the machine learning processor or as a process in a general-purpose processor. During the testing process, at 510, a user-specific inaudible sound signal is emitted over time T. At 515, reflections of the emitted user-specific inaudible sound emitted at 510 is received. Signal processing occurs at 517 and an echoprint is built for the reflected signal at 518. Signal processing is discussed with respect to FIG. 6B. At 520, the echoprint is tested by the current version of the user-specific echoprint model. Based on the test, an authentication determination is made at 525. If the user is authenticated, or if the user is not authenticated, a prompt to the user is made at 530 to determine whether the authentication which was decided at 525 was correct. If the authentication was correct or incorrect, at 540, the decision feedback 550 is provided to the learning processor. The learning processor receives the decision feedback at 560 and the correct or incorrect decision feedback is used to update a current version of the user-specific echoprint model at 570.

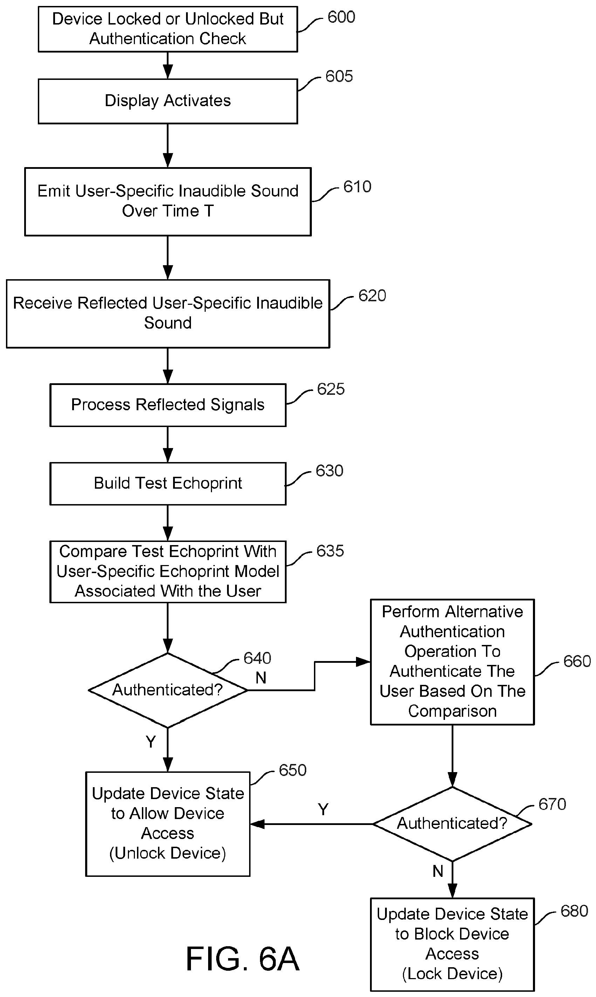

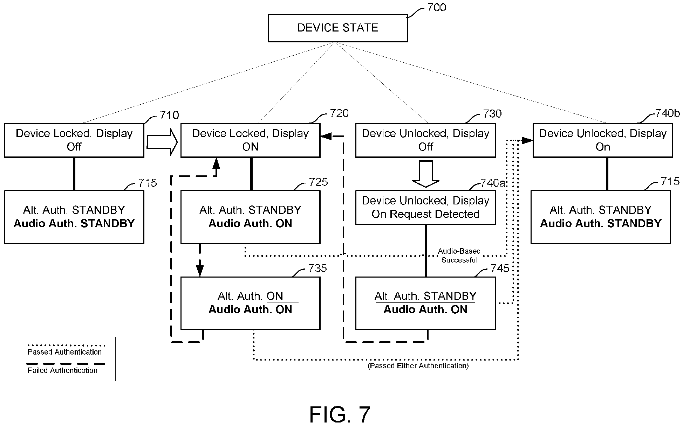

FIG. 6A illustrates a method which may be performed by the testing processor to authenticate a user for access to a processing device. As further illustrated in FIG. 7, the testing method may be dependent on a device state which reflects whether the display is on or off and whether the device is locked or unlocked. At 600, a device may be locked state which would require authentication for a user to access the device. The device may also be unlocked but may be set to periodically check authentication even when unlocked, hence starting the process flow of FIG. 6A. A user may engage with the phone to access the processing device thought a number of means which will activate the device display at 605. For example, the user may press a physical button on the processing device, the user may lift the device, or the user may initiate a key sequence on a keyboard of the processing device. Steps 610 - 640 provide an audio authentication process using a test echoprint. At 610, a user-specific inaudible sound is emitted for a sampling period. At 620, the user-specific inaudible sound reflections are received. At 625, the reflected signals are processed to extract and isolate characteristics of the reflected signal indicating specific user biometric and behavioral characteristics. A method for processing the signals is illustrated in FIG. 6B. At 630, a test echoprint is built. At 635, the echoprint is tested by comparing the echoprint to the current version of the unique user model. At 635, the process compares the test echoprint with a user-specific echoprint model associated with the user. At 640, a determination is made based on the testing result. If so, the user is authenticated at 640, and at 650, device access is provided by updating the device state to allow device access such that the device is either unlocked or remains unlocked at 650. If the test result is negative, at 640, then the user is not authenticated by audio-based authentication and at 660, an alternative form of authentication (if enabled) is provided to the user. At 650, the alternative authentication operation is performed to authenticate the user based on the comparison at 635. If the user passes the alternative form of authentication at 670, then access is provided at 650 by updating the device state. If the user does not pass the alternative authentication at 670, then device access is blocked at 680 (i.e the device is locked) by updating the device state.

Optionally, steps 610 - 640 may be repeated one or more times with the same or a different user-specific sound to attempt to authenticate the user. These steps may be repeated after a failed attempt to authenticate a user.

Steps 635 - 680 may be performed by the testing processor 140 and one embodiment of a testing processor 140 suitable for performing steps 635 - 680 is illustrated in FIG. 6B. This testing processor 140 includes code operable to instruct the processor or processing circuitry specifically implemented to compare the test echoprint with a user-specific echoprint model associated with the user at 641. This testing processor 140 includes code operable to instruct the processor or processing circuitry specifically implemented to perform an alternative authentication operation to authenticate the user based on the comparison at 643. This testing processor 140 includes code operable to instruct the processor or processing circuitry specifically implemented to update a device state according to the comparison or the alternative authentication operation performed, wherein the device state indicates whether the display is on or off and whether the device is locked or unlocked at 647.

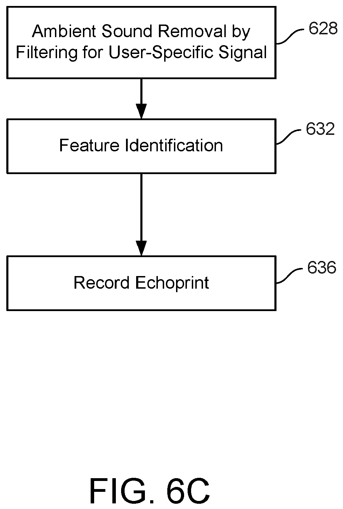

FIG 6C illustrates a method of processing a signal in accordance with step 630. At 628, ambient sound inputs are removed. In one embodiment, ambient sound may be removed. In one embodiment, ambient sounds may be removed by filtering for reflections at the user-specific sound signal.

Feature identification may occur at 632 and involves creating a set of data to train the machine learning model at 420. Each dimension of the set of data corresponds to a feature. An echoprint is recorded as a set of data at 636.

A processing device may not require a user to authenticate each time the user unlocks or operates the electronic device. In some embodiments, the computing device may allow a user to authenticate after a particular amount of time. The processing device may retain the user's authentication for a particular amount of time after having received the user's last instruction or having entered a stand-by mode. The amount of time the computing device retains authentication information may be set by the device or by the user.

FIG. 7 illustrates the on and standby states of two types of authentication which may be in simultaneous use on a processing device. Audio-based authentication such as that described above, may be simultaneously used with an alternative authentication method (such as fingerprint recognition or a passcode) to provide a user more convenience and ease in device operation. Various device status states 710, 720, 730, and 740b are shown. These four device states reflect whether the device is locked or unlocked, and whether the device display is on or off. The four possible device states are: device locked and display off 710, device locked and display on 720, device unlocked and display off at 730 and device unlocked and display on at 740b. For each device state, the status of each authentication mechanism is shown. Two dashed lines illustrate how device state and authentication method states change based on successful or unsuccessful authentication.

Typical processing devices include both power management functions and security locking functions. Power management functions include options settable by the user to conserve device power by, for example, dimming or turning off a display after a set time period of inactivity. Similarly, security settings allow a user to set both whether a device should be locked and how long after inactivity an unlocked device should re-lock itself. It is possible that power settings may turn off a device display before the security settings re-lock a device, resulting in a state (730) where a device can be unlocked but the display is off. If the display is turned on at state 730 (e.g. in response to detecting a display screen touch or a user command via a device button), the device may optionally utilize the audio authentication to re-verify (transparently to the user) that an authenticated user is accessing the device. In state 740b, one form of authentication has successfully completed (as explained below) so no additional authentication is needed.

At 710, the device is locked, and the display is off. This state may occur when a device is unused (for example, when the device is at rest and power management functions in the device turn the display off). In this device state, the alternative authentication method is in standby and audio-based authentication is off at 715. The state of "standby" means that the authentication method is not functioning but has been activated in the device setting by a user. As noted above, a user may have a choice not to activate any authentication or device locking at all, or may choose not to enable audio authentication and use some other form of authentication. The flowchart of FIG. 7 illustrates that both authentication methods are enabled, but not necessarily active or in use (i.e. ON).

When the device is locked and the display is off (at 710), both authentication methods are in STANDBY mode. In STANDBY mode, the audio authentication method is not outputting an inaudible signal and each of the processors may be powered down or off, in order to provide power efficiency.

At 720, the device state is that the device is locked and the display is on. A device display may be activated when a user interacts with the device through a physical interaction mechanism such as a physical button, or by moving the device which is detected by one or more motion sensors in the device. Once the display is on, the device state is such that it is assumed the user will likely need to access the locked device. Hence, the audio-based authentication is enabled or turned on at 725 and begins attempting to authenticate the user, while the alternative authentication method remains in standby at 725. This allows unlocking of the device using the audio-based authentication method, if successful, prior to any indication to the user that the alternative form of authentication may be needed. If authentication is successful using the audio-based method at 725, then the device is unlocked and the display remains on at 740b. If authentication is unsuccessful using the audio-based authentication method at 725, then at 735, the audio-based authentication method remains on (and continues attempting to authenticate the user) and the alternative authentication method is turned on. At 735, the user may be prompted with a message on the display indicating that attempts to authenticate the user using audio-based authentication have failed and prompting the user to use the alternative form of authentication.

If authentication is unsuccessful under both methods, then the device remains in the locked state at 720 with the display on. If device authentication is successful under either method 735, then the device is unlocked and the display is turned on at 740b.

Once the device is unlocked and the display on at 740b, both authentication methods may enter the standby mode at 715.

State 730 illustrates a state where the device is unlocked and the display is off. As noted above, this may occur when the device power settings cause the display to turn off after a shorter period of time than the device security settings would cause the device to re-lock access to the device. The state of the device will change from that at 730 to a state where the device is unlocked but the display is on at 740a with detection of user interaction with the device such as that described above. In this state, at 745, the audio-based authentication may be active to re-lock the device should the authentication method detect that the user interaction is not by an authenticated user. For example, if an authorized user unlocks the device, but then leaves the device and an unauthorized user picks up and attempts to access the device, the audio-based authentication can re-lock the device (return to state 720). If the audio-based authentication errs at 745 (and an authorized user is indeed interacting with the device), the method follows the flow from 720 - 735 allowing the user to authorize access in the manner described above. If an authorized user interacts with the phone at 740a, the audio-based authentication may authorize the user at 745 and the device will be unlocked with the display on at 740b.

The audio-based authentication (e.g. generating an inaudible signal, creating a test echoprint and comparing/testing the created test echoprint with a user specific echoprint model) or other applicable automatic authentication may be performed in a manner unaware to a user of the device. A registered or authorized user of the device may be automatically authenticated to unlock a device (e.g. turning on a display showing a working user interface of an application previously used) without a need to perform an alternative authentication operation which may require user interface operations (e.g. via a display or microphone etc.) before the user can access the previously used application. As a result, a device can activate power saving mode (e.g. display auto off ) and/or security protection (e.g. auto locking) mechanisms more often or more effectively without affecting the user experience.

FIG. 8 depicts an example of typical architecture for a mobile processing device phone. The mobile processing device 800 has memory 810, a physical connector 820, processor 840, an input/output (I/O) controller 850, a cellular radio channel and data channel 860, and power controller 870. Each of these components is connected through the system bus (not shown) of the mobile processing device 800.

Memory 810 includes the mobile processing device's operating system 812, applications 814, and non-volatile storage 830. Memory 810 can be any variety of memory storage media types, including non-volatile and volatile memory. The operating system 812 handles the different operations of the mobile processing device 800 and may contain user interfaces for operations, such as placing and receiving phone calls, text messaging, checking voicemail, and the like. The applications 814 can be any assortment of programs, such as a camera application for photos and/or videos, an address book application, a calendar application, a media player, an internet browser, games, an alarm application, other third-party applications, and the like. The applications can include a signal processor application 110a adapted to perform the functions of the signal processor 110 when executed by the processor 840, a learning processor 120a adapted to perform the functions of the learning processor 110 when executed by the processor 840, and a testing processor 140a adapted to perform the functions of the testing processor 110 when executed by the processor 840. In particular, the applications may include code 842 adapted to compare a test echoprint with a user-specific echoprint model associated with the user. The applications may further include code 844 adapted to perform an alternative authentication operation to authenticate the user based on the comparison at 842. The applications may further include code 846 adapted to update a device state according to the comparison or the alternative authentication operation performed, with the device state comprising whether the display 852 is on or off, and whether the device is locked or unlocked. The non-volatile storage component 830 in memory 810 contains data such as web caches, music, photos, contact data, scheduling data, and other files, as well as echoprints and the user-specific echoprint model.

The operating system 812 manages the hardware of the mobile processing device 800, including hardware such as the display/touchscreen 852, speaker 104, and microphone 102. The operating system 812 also manages software (i.e. applications 814) on the mobile processing device 800 for performing tasks requested by the user and handling incoming data, for example. This occurs through the operating system's control and allocation memory (i.e. RAM), system tasks, system resources, files systems, and the like. The processor 840 executes operations for the mobile processing device according to this control and allocation.

The power controller 870 of the mobile processing device 800 allocates power from the mobile processing device's power supply 872 to the circuitry for different mobile processing device components used to operate the mobile processing device 800 and its different features.

Additionally, the physical connector 820 can be used to connect the mobile processing device 800 to an external power source, such as an AC adapter or powered docking station.

The mobile processing device 800 also contains a cellular radio channel and data channel 860 for receiving and transmitting data, such as phone calls, text messages, email, webpage data, and the like. Cellular radio communication can occur through any of the standard network protocols of mobile processing device communication (i.e. GSM, PCS, DAMPS, UMTS, and the like.). The mobile processing device 800 may also contain additional communication channels 862, such as Wi-Fi, Bluetooth, and the like, for receiving and transmitting data as well. The mobile processing device 800 may have additional functional elements for communication 864, such as GPS. Each of the described communication mediums is accessed via the antenna 866 on the mobile processing device 800. The communication mediums for operations of the mobile processing device 800 are not limited to the mediums described and can include any other communication mediums known in the art.

It should be recognized that any suitable processing device, mobile or otherwise, may implement the present technology. Hence, although FIG. 8 illustrates a mobile device, similar components to those illustrated in FIG. 8 may be provided in a general purpose processing device such as a desktop computer, laptop computer.

Further, in an exemplary, non-limited embodiment, implementations can include distributed processing, component/object distributed processing, and parallel processing. Virtual computer system processing can be constructed to implement one or more of the methods or functionalities as described herein, and a processor described herein may be used to support a virtual processing environment. Aspects of the present disclosure are described herein with reference to flowchart illustrations and/or block diagrams of methods, apparatuses (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the flowchart and/or block diagram block or blocks.

In one embodiment, the technology may be implemented by a means for outputting an inaudible user-specific sound signal at a frequency from a speaker associated with the processor, such means including by way of example a user-specific audio generator 150. The technology may include means for receiving reflections of the inaudible sound signal such means including, by way of example, a microphone and signal processor. The technology may include means for generating an echoprint based on the reflections and associating the echoprint with a user which may comprise, by way of example, a signal processor 110. The technology includes means to authenticate a user to provide access to a processing device including by way of example, a testing processor.

Some embodiments herein may be implemented in computer-readable non-transitory media that includes all types of computer readable media, including magnetic storage media, optical storage media, and solid state storage media and specifically excludes signals.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description, but is not intended to be exhaustive or limited to the disclosure in the form disclosed. Many modifications and variations will be apparent to those of ordinary skill in the art without departing from the scope and spirit of the disclosure. The aspects of the disclosure herein were chosen and described in order to best explain the principles of the disclosure and the practical application, and to enable others of ordinary skill in the art to understand the disclosure with various modifications as are suited to the particular use contemplated.

For purposes of this document, each process associated with the disclosed technology may be performed continuously and by one or more computing devices. Each step in a process may be performed by the same or different computing devices as those used in other steps, and each step need not necessarily be performed by a single computing device.

## Claims

1. A processing device (100, 800) having audio-based authentication, comprising:
• a display (852);
• a microphone (102);
• a speaker (104);
• an audio signal generator (150) coupled to the speaker (104) and adapted to output a user-specific inaudible sound signal (50) from the speaker (104);
• a signal processor (110) coupled to the microphone (102) and adapted to isolate reflections (55) of the user-specific inaudible sound signal (50) and create a test echoprint based on the reflections (55); and
• a processor (140, 840) configured to:
- compare (641) the test echoprint with a user-specific echoprint model associated with the user (10);
- perform (643) an alternative authentication operation to authenticate the user (10) based on the comparison; and
- update (647) a device state according to the comparison or the alternative authentication operation performed, the device state comprising whether the display (852) is on or off, and whether the device (100, 800) is locked or unlocked,
wherein the test echoprint identifies features associated with the user (10), such features including at least biometric features or behavioral features, and
wherein the biometric features include at least cardiac attributes.

2. The processing device of claim 1,
further including a machine learning processor (120) adapted to create the user-specific echoprint model during an alternative authentication set-up procedure.

3. The processing device of claim 1 or 2,
wherein the biometric features include at least physical attributes.

4. The processing device of one of the claims 1-3,
wherein the machine learning processor (120) is adapted to build the user-specific echoprint model during a period less than or equal to beginning when a user (10) enables authentication through when a user (10) selects to enable audio-based authentication.

5. The processing device of claim 4,
wherein the signal processor (110) is adapted to build the user-specific echoprint during a period between entry of a password entry user interface through a user-interface prompt suggesting the user (10) enable audio-based authentication.

6. The processing device of one of the claims 1-5,
further including a non-volatile storage device (130) adapted to store one or more echoprints generated by the signal processor (110) as a training data set and the user-specific echoprint model.

7. The processing device of one of the claims 1-6,
wherein the machine learning processor (120) is adapted to receive user feedback on authentication recognition and update the user-specific echoprint model based on the feedback.

8. The processing device of one of the claims 1-7,
wherein the audio signal generator (150) and signal processor are adapted to operate while the display (852) is on and the device (100, 800) is locked, and are adapted to remain in standby when the display (852) is off and the device (100, 800) is locked.

9. A computer implemented method of authenticating user access to a processing device (100, 800) having audio-based authentication according to claim 1 and a display (852), comprising:
• generating a user-specific echoprint model using a machine learning processor (120) by
- outputting an inaudible sound signal (50) at a user-specific frequency from a speaker (104) associated with the processing device (100, 800), and
- receiving reflections (55) of the inaudible sound signal (50) at a microphone (102) associated with the processing device (100, 800) while the user (10) interacts with an alternative authentication user interface;
• authenticate the user access when the display (852) is on by
- generating a test echoprint based on the reflections of the inaudible sound signal by outputting an inaudible test sound signal (50) at a user-specific frequency from the speaker (104), and
- receiving reflections (55) of the inaudible test sound signal (50) at the microphone (102) and isolating the reflections of the inaudible sound signal by a signal processor (110);
- comparing the test echoprint with the user-specific echoprint model to determine whether to allow the user (10) to access the processing device (100, 800);
• performing an alternative authentication method to authenticate the user (10) based on the comparison; and
• allowing or denying access to the processing device (100, 800) based on the testing by updating a device state according to the comparing or the alternative authentication operation performed, the device state comprising whether the display (852) is on or off, and whether the device (100, 800) is locked or unlocked,
wherein the test echoprint identifies features associated with the user (10), such features including at least biometric features or behavioral features, and
wherein the biometric features include at least cardiac attributes.

10. The processor implemented method of claim 9,
wherein the generating a test echoprint, the receiving reflections (55) of the inaudible test sound signal (50), and the testing occur while the display (852) is on and the device (100, 800) is locked, and do not occur when the display (852) is off or the device (100, 800) is locked.

11. The processor implemented method of claim 10,
wherein the outputting and receiving for generating the user-specific echoprint model are repeated a plurality of times to create a training dataset for a machine learning process.

12. The processor implemented method of one of the claims 9-11,
wherein the testing outputs a different user-specific inaudible test sound signal (50) upon an authentication failure, and the testing isolates reflections (55) of the different user-specific inaudible test sound signal (50) and creates a new test echoprint based on the reflections (55) of the different user-specific inaudible test sound signal (50).

13. The processor implemented method of one of the claims 9-12,
wherein the generating comprises identifying features associated with the user (10), such features including at least biometric features or behavioral features.

14. A non-transitory computer-readable medium storing computer instructions, that when executed by a processing device (100, 800) having audio-based authentication according to claim 1, cause the processing device (100, 800) to perform the steps of:
• generating an echoprint model for a user (10) by:
- outputting an inaudible sound signal (50) at a user-specific frequency from a speaker (104) associated with the processor;
- receiving reflections (55) of the inaudible sound signal (50);
- generating an echoprint based on the reflections (55) and associating the echoprint with a user (10);
- repeating the outputting, receiving and generating to create training data;
- training an echoprint model using a machine learning process based on the training data; and
• authenticating a user (10) to provide access to a processing device (100, 800) having a display (852), by, when the display (852) is on and the device (100, 800) is locked:
- outputting an inaudible test sound signal (50) at the user-specific frequency from a speaker associated with the processing device (100, 800);
- receiving reflections (55) of the inaudible test sound signal (50) and isolating the reflections of the inaudible sound signal;
- generating at least one test echoprint based on the reflections (55) of the inaudible test sound signal (50);
- comparing test echoprint by a user-specific echoprint model to determine whether to allow the user (10) to access the processing device (100, 800);
- performing an alternative authentication method to authenticate the user (10) based on the comparing; and
• allow or denying access to the processing device (100, 800) based on the testing and the alternative authentication method by updating a device state according to the comparing or the alternative authentication operation performed, the device state comprising whether the display is on or off, and whether the device (100, 800) is locked or unlocked,
wherein the test echoprint identifies features associated with the user (10), such features including at least biometric features or behavioral features, and
wherein the biometric features include at least cardiac attributes.

## Patentansprüche

1. Verarbeitungsvorrichtung (100, 800), die eine audiobasierte Authentifizierung aufweist, umfassend:
• eine Anzeige (852);
• ein Mikrofon (102);
• einen Lautsprecher (104);
• einen Audiosignalgenerator (150), der mit dem Lautsprecher (104) gekoppelt ist und geeignet ist, um ein benutzerspezifisches unhörbares Tonsignal (50) über den Lautsprecher (104) auszugeben;
• einen Signalprozessor (110), der mit dem Mikrofon (102) gekoppelt ist und geeignet ist, um Reflexionen (55) des benutzerspezifischen unhörbaren Tonsignals (50) zu isolieren und einen Test-Echoprint basierend auf den Reflexionen (55) zu erstellen; und
• einen Prozessor (140, 840), der konfiguriert ist zum:
- Vergleichen (641) des Test-Echoprints mit einem benutzerspezifischen Echoprint-Modell, das mit dem Benutzer assoziiert ist (10);
- Durchführen (643) einer alternativen Authentifizierungsoperation, um den Benutzer (10) basierend auf dem Vergleich zu authentifizieren; und
- Aktualisieren (647) eines Vorrichtungszustands gemäß dem durchgeführten Vergleich oder der durchgeführten alternativen Authentifizierungsoperation, wobei der Vorrichtungszustand umfasst, ob die Anzeige (852) ein- oder ausgeschaltet ist und ob die Vorrichtung (100, 800) gesperrt oder entsperrt ist,
wobei der Test-Echoprint Merkmale identifiziert, die mit dem Benutzer (10) assoziiert sind, wobei derartige Merkmale mindestens biometrische Merkmale oder Verhaltensmerkmale beinhalten, und
wobei die biometrischen Merkmale mindestens herzbezogene Attribute beinhalten.

2. Verarbeitungsvorrichtung nach Anspruch 1,
die ferner einen Maschinenlernprozessor (120) beinhaltet, der geeignet ist, um das benutzerspezifische Echoprint-Modell während einer alternativen Authentifizierungseinrichtungsprozedur zu erstellen.

3. Verarbeitungsvorrichtung nach Anspruch 1 oder 2,
wobei die biometrischen Merkmale mindestens physische Attribute beinhalten.

4. Verarbeitungsvorrichtung nach einem der Ansprüche 1 bis 3,
wobei der Maschinenlernprozessor (120) geeignet ist, um das benutzerspezifische Echoprint-Modell während eines Zeitraums zu bilden, der kleiner oder gleich einem Startprozess ist, wenn ein Benutzer (10) eine Authentifizierung dadurch aktiviert, dass ein Benutzer (10) auswählt, eine Audio-basierte Authentifizierung zu aktivieren.

5. Verarbeitungsvorrichtung nach Anspruch 4,
wobei der Signalprozessor (110) geeignet ist, um den benutzerspezifischen Echoprint während eines Zeitraums zwischen einer Eingabe eines Passworts und einer Eingabebenutzeroberfläche mit einer Aufforderung der Benutzeroberfläche zu bilden, die dem Benutzer (10) vorschlägt, eine audiobasierte Authentifizierung zu aktivieren.

6. Verarbeitungsvorrichtung nach einem der Ansprüche 1 bis 5,
die ferner eine nicht-flüchtige Speichervorrichtung (130) beinhaltet, die geeignet ist, um einen oder mehrere Echoprints, die von dem Signalprozessor (110) erzeugt werden, als einen Trainingsdatensatz und das benutzerspezifische Echoprint-Modell zu speichern.

7. Verarbeitungsvorrichtung nach einem der Ansprüche 1 bis 6,
wobei der Maschinenlernprozessor (120) geeignet ist, um eine Benutzerrückmeldung über eine Authentifizierungserkennung zu empfangen und das benutzerspezifische Echoprint-Modell basierend auf der Rückmeldung zu aktualisieren.

8. Verarbeitungsvorrichtung nach einem der Ansprüche 1 bis 7,
wobei der Audiosignalgenerator (150) und der Signalprozessor geeignet sind, um zu funktionieren, während die Anzeige (852) eingeschaltet ist und die Vorrichtung (100, 800) gesperrt ist, und geeignet sind, um in einem Stand-by zu bleiben, wenn die Anzeige (852) ausgeschaltet ist und die Vorrichtung (100, 800) gesperrt ist.

9. Computerimplementiertes Verfahren zum Authentifizieren eines Benutzerzugriffs auf eine Verarbeitungsvorrichtung (100, 800), die eine audiobasierten Authentifizierung aufweist, nach Anspruch 1 und auf eine Anzeige (852), umfassend:
• Erzeugen eines benutzerspezifischen Echoprint-Modells unter Verwendung eines Maschinenlernprozessors (120), indem
- ein unhörbares Tonsignal (50) mit einer benutzerspezifischen Frequenz von einem Lautsprecher (104) ausgegeben wird, der mit der Verarbeitungsvorrichtung (100, 800) assoziiert ist, und
- Reflexionen (55) des unhörbaren Tonsignals (50) an einem Mikrofon (102) empfangen werden, das mit der Verarbeitungsvorrichtung (100, 800) assoziiert ist, während der Benutzer (10) mit einer alternativen Authentifizierungsbenutzeroberfläche interagiert;
• Authentifizieren des Benutzerzugriffs, wenn die Anzeige (852) eingeschaltet ist, indem
- ein Test-Echoprint basierend auf den Reflexionen des unhörbaren Tonsignals durch ein Ausgeben eines unhörbaren Testtonsignals (50) mit einer benutzerspezifischen Frequenz von dem Lautsprecher (104) erzeugt wird, und
- Reflexionen (55) des unhörbaren Testschallsignals (50) an dem Mikrofon (102) empfangen werden und die Reflexionen des unhörbaren Schallsignals durch einen Signalprozessor (110) isoliert werden;
- der Test-Echoprint mit dem benutzerspezifischen Echoprint-Modell verglichen wird, um zu ermitteln, ob dem Benutzer (10) erlaubt wird, auf die Verarbeitungsvorrichtung (100, 800) zuzugreifen;
• Durchführen eines alternativen Authentifizierungsverfahrens zum Authentifizieren des Benutzers (10) basierend auf dem Vergleich; und
• Erlauben oder Verweigern eines Zugriffs auf die Verarbeitungsvorrichtung (100, 800) basierend auf dem Testen, indem ein Vorrichtungszustand gemäß dem durchgeführten Vergleich oder der durchgeführten alternativen Authentifizierungsoperation aktualisiert wird, wobei der Vorrichtungszustand umfasst, ob die Anzeige (852) ein- oder ausgeschaltet ist und ob die Vorrichtung (100, 800) gesperrt oder entsperrt ist,
wobei der Test-Echoprint Merkmale identifiziert, die mit dem Benutzer (10) assoziiert sind, wobei derartige Merkmale mindestens biometrische Merkmale oder Verhaltensmerkmale beinhalten, und
wobei die biometrischen Merkmale mindestens herzbezogene Attribute beinhalten.

10. Prozessorimplementiertes Verfahren nach Anspruch 9,
wobei das Erzeugen eines Test-Echoprints, die Empfangsreflexionen (55) des unhörbaren Testtonsignals (50) und das Testen stattfinden, während die Anzeige (852) eingeschaltet ist und die Vorrichtung (100, 800) gesperrt ist, aber nicht stattfinden, wenn die Anzeige (852) ausgeschaltet ist oder die Vorrichtung (100, 800) gesperrt ist.

11. Prozessorimplementiertes Verfahren nach Anspruch 10,
wobei das Ausgeben und Empfangen zum Erzeugen des benutzerspezifischen Echoprint-Modells eine Vielzahl von Malen wiederholt werden, um einen Trainingsdatensatz für einen Maschinenlernprozess zu erstellen.

12. Prozessorimplementiertes Verfahren nach einem der Ansprüche 9 bis 11,
wobei das Testen bei einem Authentifizierungsfehler ein anderes benutzerspezifisches unhörbares Testtonsignal (50) ausgibt und das Testen Reflexionen (55) des anderen benutzerspezifischen unhörbaren Testtonsignals (50) isoliert und basierend auf den Reflexionen (55) des anderen benutzerspezifischen unhörbaren Testtonsignals (50) einen neuen Test-Echoprint erstellt.

13. Prozessorimplementiertes Verfahren nach einem der Ansprüche 9 bis 12,
wobei das Erzeugen ein Identifizieren von Merkmalen umfasst, die mit dem Benutzer (10) assoziiert sind, wobei derartige Merkmale mindestens biometrische Merkmale oder Verhaltensmerkmale beinhalten.

14. Nicht-flüchtiges computerlesbares Medium, in dem Computeranweisungen gespeichert sind, die, wenn sie von einer Verarbeitungsvorrichtung (100, 800) nach Anspruch 1 ausgeführt werden, die eine audiobasierte Authentifizierung aufweist, die Verarbeitungsvorrichtung (100, 800) veranlassen, die folgenden Schritte durchzuführen:
• Erzeugen eines Echoprint-Modells für einen Benutzer (10) indem:
- ein unhörbares Tonsignal (50) mit einer benutzerspezifischen Frequenz von einem Lautsprecher (104) ausgegeben wird, der mit dem Prozessor assoziiert ist, und
- Reflexionen (55) des unhörbaren Schallsignals (50) empfangen werden;
- ein Echoprint basierend auf den Reflexionen (55) erzeugt wird und der Echoprint mit einem Benutzer (10) assoziiert wird;
- das Ausgeben, Empfangen und Erzeugen wiederholt werden, um Trainingsdaten zu erstellen;
- ein Echoprint-Modell unter Verwendung eines maschinellen Lernprozesses auf der Grundlage der Trainingsdaten trainiert wird; und
• Authentifizieren eines Benutzers (10), um einen Zugriff auf eine Verarbeitungsvorrichtung (100, 800), die eine Anzeige (852) aufweist, bereitzustellen, wenn die Anzeige (852) eingeschaltet ist und die Vorrichtung (100, 800) gesperrt ist, indem:
- ein unhörbares Testtonsignal (50) mit der benutzerspezifischen Frequenz von einem Lautsprecher ausgegeben wird, der mit der Verarbeitungsvorrichtung (100, 800) assoziiert ist;
- Reflexionen (55) des unhörbaren Testschallsignals (50) empfangen werden und die Reflexionen des unhörbaren Schallsignals isoliert werden;
- mindestens ein Test-Echoprint basierend auf den Reflexionen (55) des unhörbaren Testschallsignals (50) erzeugt wird;
- der Test-Echoprint mit einem benutzerspezifischen Echoprint-Modell verglichen wird, um zu ermitteln, ob dem Benutzer (10) erlaubt wird, auf die Verarbeitungsvorrichtung (100, 800) zuzugreifen;
- ein alternatives Authentifizierungsverfahren zum Authentifizieren des Benutzers (10) basierend auf dem Vergleich durchgeführt wird; und
• Erlauben oder Verweigern eines Zugriffs auf die Verarbeitungsvorrichtung (100, 800) basierend auf dem Testen und dem alternativen Authentifizierungsverfahren, indem ein Vorrichtungszustand gemäß dem durchgeführten Vergleich oder der durchgeführten alternativen Authentifizierungsoperation aktualisiert wird, wobei der Vorrichtungszustand umfasst, ob die Anzeige ein- oder ausgeschaltet ist und ob die Vorrichtung (100, 800) gesperrt oder entsperrt ist,
wobei der Test-Echoprint Merkmale identifiziert, die mit dem Benutzer (10) assoziiert sind, wobei derartige Merkmale mindestens biometrische Merkmale oder Verhaltensmerkmale beinhalten, und
wobei die biometrischen Merkmale mindestens herzbezogene Attribute beinhalten.

## Revendications

1. Dispositif de traitement (100, 800) ayant une authentification à base audio comprenant :
• un afficheur (852) ;
• un microphone (102) ;
• un haut-parleur (104) ;
• un générateur de signal audio (150) couplé au haut-parleur (104) et adapté pour émettre en sortie du haut-parleur (104) un signal sonore inaudible spécifique à un utilisateur (50) ;
• un processeur de signal (110) couplé au microphone (102) et adapté pour isoler les réflexions (55) du signal sonore inaudible spécifique à l'utilisateur (50) et créer un échoprint de test sur la base des réflexions (55) ; et
• un processeur (140, 840) configuré pour :
- comparer (641) l'échoprint de test avec un modèle d'échoprint spécifique à un utilisateur associé à l'utilisateur (10) ;
- effectuer (643) une opération alternative d'authentification en vue d'authentifier l'utilisateur (10) sur la base de la comparaison ; et
- mettre à jour (647) un état de dispositif en fonction de la comparaison ou de l'opération d'authentification alternative effectuée, l'état de dispositif comprenant si l'afficheur (852) est allumé ou éteint, et si le dispositif (100, 800) est verrouillé ou déverrouillé,
l'échoprint de test identifiant des caractéristiques associées à l'utilisateur (10), ces caractéristiques comprenant au moins des caractéristiques biométriques ou des caractéristiques comportementales, et
les caractéristiques biométriques comportant au moins des attributs cardiaques.

2. Dispositif de traitement selon la revendication 1,
comprenant en outre un processeur d'apprentissage automatique (120) adapté pour créer le modèle d'échoprint spécifique à un utilisateur pendant une procédure d'établissement d'authentification alternative.

3. Dispositif de traitement selon la revendication 1 ou 2,
les caractéristiques biométriques comportant au moins des attributs physiques.

4. Dispositif de traitement selon l'une des revendications 1 à 3,
le processeur d'apprentissage automatique (120) étant adapté pour construire le modèle d'échoprint spécifique à un utilisateur pendant une période inférieure ou égale à celle commençant lorsqu'un utilisateur (10) autorise l'authentification lorsqu'un utilisateur (10) choisit d'activer l'authentification à base audio.

5. Dispositif de traitement selon la revendication 4,
le processeur de signal (110) étant adapté pour construire l'échoprint spécifique à l'utilisateur pendant une période entre l'entrée d'une interface utilisateur d'entrée de mot de passe par l'intermédiaire d'une invite d'interface utilisateur suggérant à l'utilisateur (10) de permettre une authentification à base audio.

6. Dispositif de traitement selon l'une des revendications 1 à 5,
comprenant en outre un dispositif de stockage non volatil (130) adapté pour stocker un ou plusieurs échoprints générés par le processeur de signal (110) sous forme d'ensemble de données d'apprentissage et le modèle d'échoprint spécifique à un utilisateur.

7. Dispositif de traitement selon l'une des revendications 1 à 6,
le processeur d'apprentissage automatique (120) étant adapté pour recevoir un retour d'information de l'utilisateur sur la reconnaissance d'authentification et mettre à jour le modèle d'échoprint spécifique à un utilisateur sur la base du retour d'information.

8. Dispositif de traitement selon l'une des revendications 1 à 7,
le générateur de signal audio (150) et le processeur de signal étant adaptés pour fonctionner lorsque l'afficheur (852) est allumé et que le dispositif (100, 800) est verrouillé, et étant adaptés pour rester en veille lorsque l'afficheur (852) est éteint et que le dispositif (100, 800) est verrouillé.

9. Procédé mis en œuvre par ordinateur d'authentification d'un accès d'un utilisateur à un dispositif de traitement (100, 800) ayant une authentification à base audio selon la revendication 1 et un afficheur (852), comprenant :
• la génération d'un modèle d'échoprint spécifique à un utilisateur à l'aide d'un processeur d'apprentissage automatique (120) par
- l'émission d'un signal sonore inaudible (50) à une fréquence propre à l'utilisateur à partir d'un haut-parleur (104) associé au dispositif de traitement (100, 800), et
- la réception de réflexions (55) du signal sonore inaudible (50) au niveau d'un microphone (102) associé au dispositif de traitement (100, 800) pendant que l'utilisateur (10) interagit avec une interface utilisateur d'authentification alternative ;
• l'authentification de l'accès utilisateur lorsque l'afficheur (852) est allumé par
- la génération d'un échoprint de test sur la base des réflexions du signal sonore inaudible en émettant un signal sonore de test inaudible (50) à une fréquence spécifique à l'utilisateur en sortie du haut-parleur (104), et
- la réception de réflexions (55) du signal sonore de test inaudible (50) au niveau du microphone (102 et l'isolation des réflexions du signal sonore inaudible par un processeur de signal (110) :
- la comparaison de l'échoprint de test avec le modèle d'échoprint spécifique à un utilisateur pour déterminer s'il faut permettre à l'utilisateur (10) d'accéder au dispositif de traitement (100, 800) ;
• la réalisation d'un procédé d'authentification alternatif pour authentifier l'utilisateur (10) sur la base de la comparaison ; et
• le fait de permettre ou refuser l'accès au dispositif de traitement (100, 800) sur la base du test par mise à jour d'un état de dispositif en fonction de la comparaison ou de l'opération d'authentification alternative effectuée, l'état de dispositif comprenant si l'afficheur (852) est allumé ou éteint, et si le dispositif (100, 800) est verrouillé ou déverrouillé,
l'échoprint de test identifiant des caractéristiques associées à l'utilisateur (10), ces caractéristiques comprenant au moins des caractéristiques biométriques ou des caractéristiques comportementales, et
les caractéristiques biométriques comportant au moins des attributs cardiaques.

10. Procédé mis en œuvre par processeur selon la revendication 9,
la génération d'un échoprint de test, les réflexions de réception (55) du signal sonore de test inaudible (50) et le test se produisant lorsque l'afficheur (852) est allumé et que le dispositif (100, 800) est verrouillé, et ne se produisant pas lorsque l'afficheur (852) est éteint ou que le dispositif (100, 800) est verrouillé.

11. Procédé mis en œuvre par processeur selon la revendication 10,
l'émission et la réception pour générer le modèle d'échoprint spécifique à un utilisateur étant répétées une pluralité de fois pour créer un ensemble de données d'apprentissage pour un processus d'apprentissage automatique.

12. Procédé mis en œuvre par processeur selon l'une des revendications 9 à 11,
le test produisant un signal sonore de test inaudible différent spécifique à l'utilisateur (50) en cas d'échec d'authentification, et le test isolant les réflexions (55) du signal sonore de test inaudible différent spécifique à l'utilisateur (50) et créant un nouvel échoprint de test sur la base des réflexions (55) du signal sonore de test inaudible différent spécifique à l'utilisateur (50).

13. Procédé mis en œuvre par processeur selon l'une des revendications 9 à 12,
la génération comprenant des caractéristiques d'identification associées à l'utilisateur (10), ces caractéristiques comprenant au moins des caractéristiques biométriques ou des caractéristiques comportementales.

14. Support lisible par ordinateur non transitoire mémorisant des instructions informatiques qui, lorsqu'elles sont exécutées par un dispositif de traitement (100, 800) ayant une authentification à base audio selon la revendication 1, amènent le dispositif de traitement (100, 800) à effectuer les étapes de :
• la génération d'un modèle d'échoprint pour un utilisateur (10) par :
- l'émission d'un signal sonore inaudible (50) à une fréquence propre à l'utilisateur à partir d'un haut-parleur (104) associé au processeur ;
- la réception de réflexions (55) du signal sonore inaudible (50) ;
- la génération d'un échoprint sur la base des réflexions (55) et l'association de l'échoprint à un utilisateur (10) ;
- la répétition de l'émission, de la réception et de la génération pour créer des données d'apprentissage ;
- la formation d'un modèle d'échoprint à l'aide d'un processus d'apprentissage automatique sur la base des données d'apprentissage ; et
• l'authentification d'un utilisateur (10) pour fournir un accès à un dispositif de traitement (100, 800) comportant un afficheur (852), par, lorsque l'afficheur (852) est allumé et que le dispositif (100, 800) est verrouillé :
- l'émission d'un signal sonore de test inaudible (50) à la fréquence propre à l'utilisateur à partir d'un haut-parleur associé au dispositif de traitement (100, 800) ;
- la réception de réflexions (55) du signal sonore test inaudible (50) et l'isolation des réflexions du signal sonore inaudible ;
- la génération d'au moins un échoprint de test sur la base des réflexions (55) du signal sonore de test inaudible (50),
- la comparaison d'échoprint de test par un modèle d'échoprint spécifique à un utilisateur pour déterminer s'il faut permettre à l'utilisateur (10) d'accéder au dispositif de traitement (100, 800) ;
- la réalisation d'un procédé d'authentification alternatif pour authentifier l'utilisateur (10) sur la base de la comparaison ; et
• le fait de permettre ou refuser l'accès au dispositif de traitement (100, 800) sur la base du test et du procédé d'authentification alternatif en mettant à jour un état de dispositif en fonction de l'opération de comparaison ou d'authentification alternative effectuée, l'état de dispositif comprenant si l'afficheur est allumé ou éteint, et si le dispositif (100, 800) est verrouillé ou déverrouillé,
l'échoprint de test identifiant des caractéristiques associées à l'utilisateur (10), ces caractéristiques comprenant au moins des caractéristiques biométriques ou des caractéristiques comportementales, et
les caractéristiques biométriques comportant au moins des attributs cardiaques.
